# EUROPEAN PATENT SPECIFICATION

(11) **EP 4 048 601 B1**
(45) Date of publication and mention of the grant of the patent: **16.08.2023**
(21) Application number: 20790320.4
(22) Date of filing: 20.10.2020
(51) Int. Cl.: B65D 47/24, A47G 19/22, A47J 41/00

(54) **DRINKING BOTTLE CLOSURE**
TRINKFLASCHENVERSCHLUSS
DISPOSITIF DE FERMETURE DE BIDON

(30) Priority: 21.10.2019 DE 102019128302; 21.10.2019 FR 1911759
(43) Date of publication of application: 31.08.2022
(73) Proprietor: Emsa GmbH, 48282 Emsdetten (DE)
(72) Inventor: HORSTMANN, Klaus, 48485 Neuenkirchen (DE)
(74) Representative: SEB Développement
(86) International application number: PCT/EP2020/079442
(87) International publication number: WO 2021/078709

(56) References cited:
- DE-U1-202009 014 964
- DE-U1-202017 100 771

## Description

The invention relates to a drinking bottle closure with the features of the generic term of claim 1.

Such a drinking bottle closure is described in DE 20 2017 100 395 U1. The double seal on both the underside and the top increases leakage protection on the one hand. On the other hand, the cavities in the drinking bottle closure through which the water flows during drinking are sealed off from the outside, which means that droplets are retained within the drinking bottle closure when the drinking bottle closure is in the closed position.

What is desirable is an increased axial stroke, so that the user can better visually recognise the opening position and that more liquid can flow through the pouring opening when drinking.

However, there is a limiting relationship between the axial stroke of the sealing elements and the size. With the known pressure-latching units, which have rotating elements, as known from a so-called ball pen drive, the flanks on the guide pads must have seen a certain angle of attack in the direction of movement, which cannot be arbitrarily steep.

This means that the axial stroke can only be extended by increasing the diameter considerably, which is often not desired, because a large diameter drinking bottle closure not only takes up more space in the user's luggage, but also the pouring behaviour changes with a large diameter. The curvature must not be too small for bottle caps where the user wants to drink directly with the lips over the rim of the spout.

In addition, a generic drinking bottle cap in accordance with the preamble of claim 1 is known from DE 20 2017 100 771 U1. Here, too, the two possible positions of the sealing elements are specified via a pressure/latch unit, so that the stroke is limited here, too. The object of the invention is thus to provide a larger axial stroke and/or a smaller diameter for a drinking bottle closure of the type mentioned above.

This object is achieved by a drinking bottle closure with the features of claim 1.

Due to the long guide tongue, it can bounce widely to the side when it meets the guide baffle. Its end does not have to be in permanent contact with the guide baffle.

It is sufficient if the contact is made at the end of the intended axial stroke and the safe transfer into the positively locked open position and out of that position is ensured. According to the invention, the possible axial stroke is thus mainly determined by the spring element.

At maximum compression of the compression spring, the guide tongue with its hook projection must still be able to spring out of the locked position to leave the open position, and in the closed position the spring force of the expanded spring must still be sufficient to achieve the sealing effect.

A preferred embodiment provides that the valve unit comprises an upper part with the upper valve disc and a lower part with the lower sealing element and that the upper part and/or lower part are passed through at least one guide recess in the valve support element. In addition, the upper part and the lower part can be coupled together in a form-fit manner.

Each of the three parts, i.e. upper part, lower part and valve support element, can be produced as a plastic injection moulded part easily.

Guidance between the valve unit and the valve support element is preferably achieved by forming at least one longitudinal web on the top part, which extends axially parallel to the longitudinal axis of the valve unit and is guided by the guide recess in the valve support element.

Preferably, a profile element is formed on its lower edge and at least one receiving shoe is formed on the lower part into which the profile element can be inserted.

It is possible to provide a colour contrast between the valve disc and the inner wall of the housing in the area of the outlet opening so that the open position is easily recognisable to the user.

Other advantageous designs are explained in more detail with reference to the embodiments of the invention shown in the drawings. The figures show in detail:
- Fig. 1: a drinking bottle closure and a drinking bottle in perspective view;
- Fig. 2: the partially disassembled drinking bottle closure in perspective view;
- Fig. 3: the disassembled drinking bottle closure in perspective exploded view;
- Fig. 4: a valve unit in perspective view;
- Fig. 5: the mounted drinking bottle closure in the opening position, in sectional view;
- Fig. 6: the drinking bottle closure in the opening position, in a sectional view rotated by 90° compared to Fig. 5;
- Fig. 7: the drinking bottle closure in closed position, in sectional view;
- Fig. 8: shows the drinking bottle closure in the closed position, in a sectional view rotated by 90° compared to Fig. 7;
- Fig. 9: the drinking bottle closure in the opening position according to Fig. 6, with a pouring opening pointing downwards;
- Fig. 10: a disassembled alternative upper part for the drinking bottle closure and
- Fig. 11: the assembled alternative upper part.

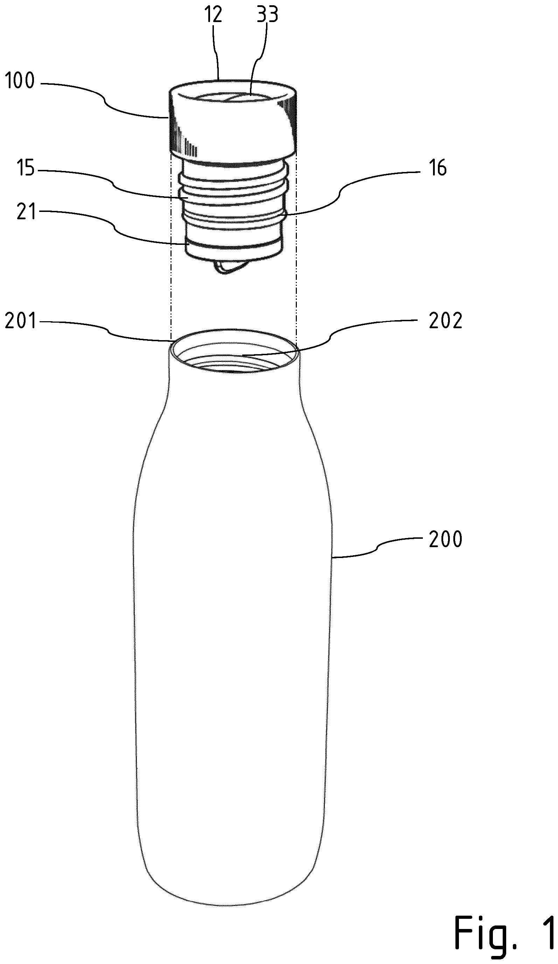

Figure 1 shows a drinking bottle cap 100 above a drinking bottle 200. The drinking bottle cap 100 has an external thread 15 on its outer circumference with which it can be inserted into an internal thread 202 in the neck 201 of the drinking bottle 200. A pouring rim 12 on the top is designed so that the lips can be used to drink directly from the bottle after an upper valve disc 33, which also forms an actuating element, and a lower sealing element 21 have been lowered and are no longer pressed against the housing 10 of the drinking bottle closure 100. The housing 10 also has a sealing ring 16 for sealing against the bottle neck 201.

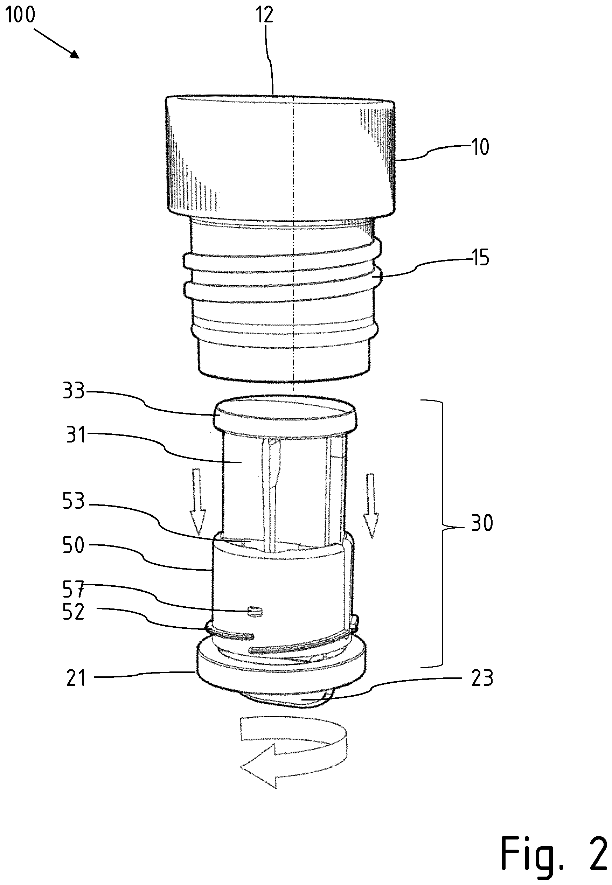

Figure 2 shows a partially disassembled drinking bottle cap 100 in perspective view. A valve unit 30 and a valve support element 50 have been unscrewed from the housing 10 and then pulled off downwards as indicated by the block arrows.The valve unit 30 is fixed in the housing 10 by means of an external thread 52 on the valve support element 50. A projection 57 is provided to form both an end stop and a detent point, through which the user receives acoustic and haptic feedback that the valve support element 50 is correctly inserted.

Furthermore, the valve unit 30 comprises an upper part 31 with an upper valve disc 33 and a lower part 20, of which only the outer edge of a lower valve disc with a seal 21 and a knob 23 are visible here. The upper part 31 and the lower part 20 are connected to each other and extend as a unit through 51 in the valve support element 50.

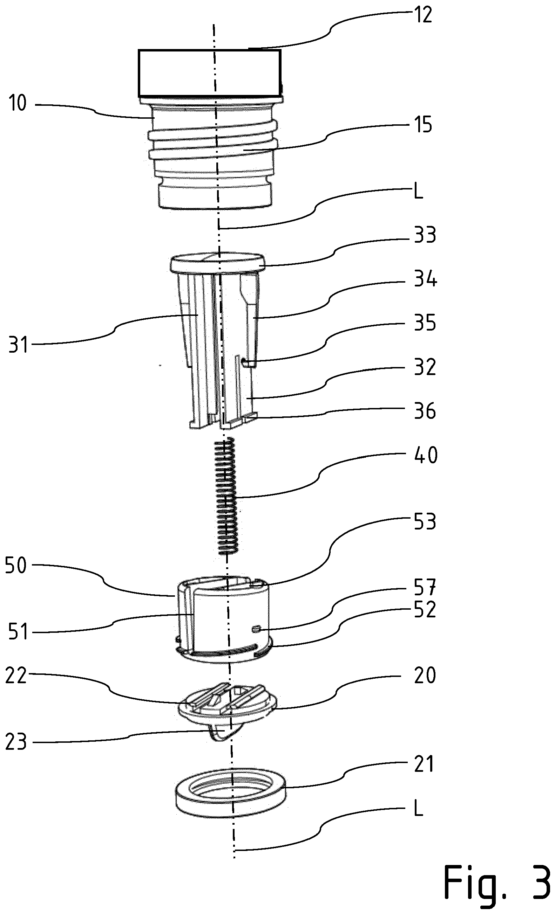

A further disassembly stage of the drinking bottle closure 100 is shown in the further perspective view in figure 3. All parts of the valve unit 30 are clearly visible there. The upper part 31 comprises the upper valve disc 33, the outer edge of which provides the seal at the edge of a pouring opening in the housing 10 and the central surface of which also serves as a button to move the valve unit 30 and thus open the closure. The upper part 31 comprises two longitudinal webs 32, which are arranged parallel to each other and are arranged in mirror-symmetrical arrangement with respect to a longitudinal axis L. For greater elasticity, the two longitudinal webs 32 are divided in two again by a slot in their respective lower sections. At the respective lower edge of the longitudinal webs 32 a profile element 36 is formed, which in the embodiment shown is designed as a web pointing at right angles to the outside. Guide tongues 34 with hook extensions 35 at their end each enter a guide recess 53 on the valve support element 50. Two guide recesses 53 are formed laterally next to the central recess 50. Between the two longitudinal bars 32 there is a receiving space in which the compression spring 40 is to be positioned. The profile elements 36 on the respective edge of the longitudinal webs 32 are designed to be inserted into receiving shoes 22 on the lower part 20. The insertion direction is transverse to the longitudinal axis L. On the underside of the lower part 20 there is also a knob 23, which allows the entire valve unit 30 to be rotated in relation to the housing 10 in order to be fixed in it or removed for cleaning. Due to the rotation, the external thread 52 engages in a corresponding internal thread on the housing 10 and fixes the valve support element 50 with the valve unit 30 in it. The essential sealing effect of the drinking bottle closure is produced in the lower area, via the lower elastomeric sealing element 21, which is provided on the outer edge of the lower part 20.

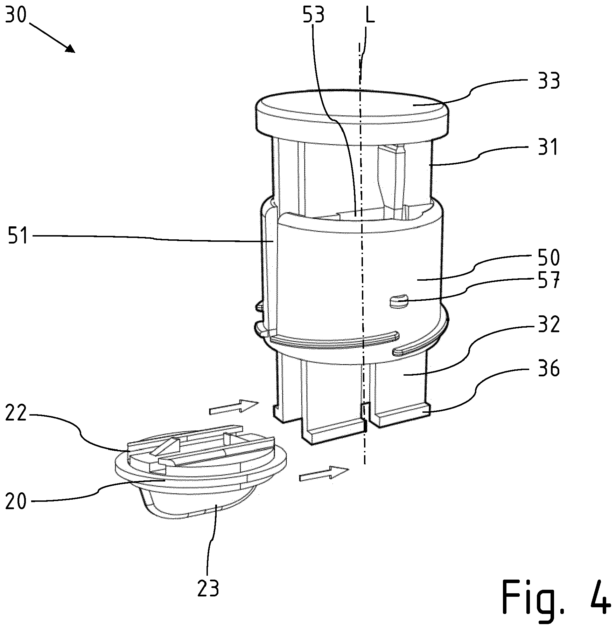

The attachment of the lower part 20 to the upper part 31 is shown in the perspective view of the valve unit 30 in figure 4. There the design of the receiving shoe 22 for the profile element 36 is also shown in detail.

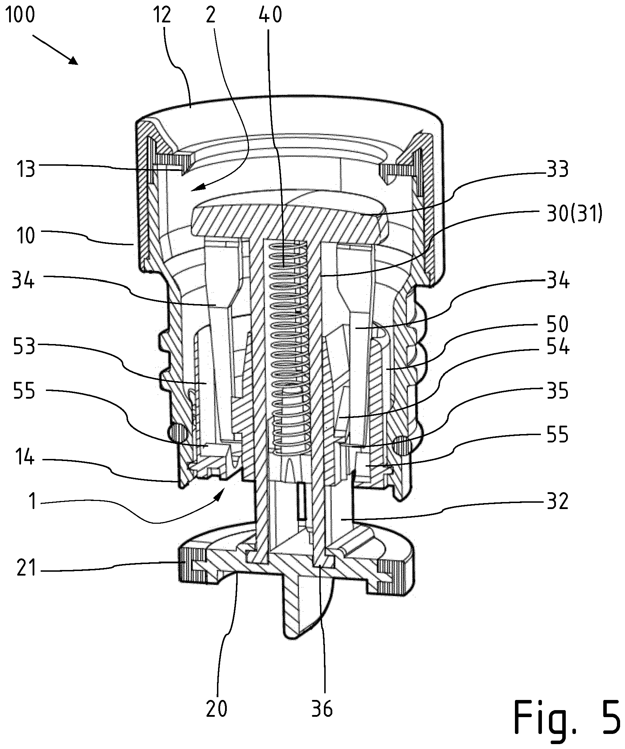

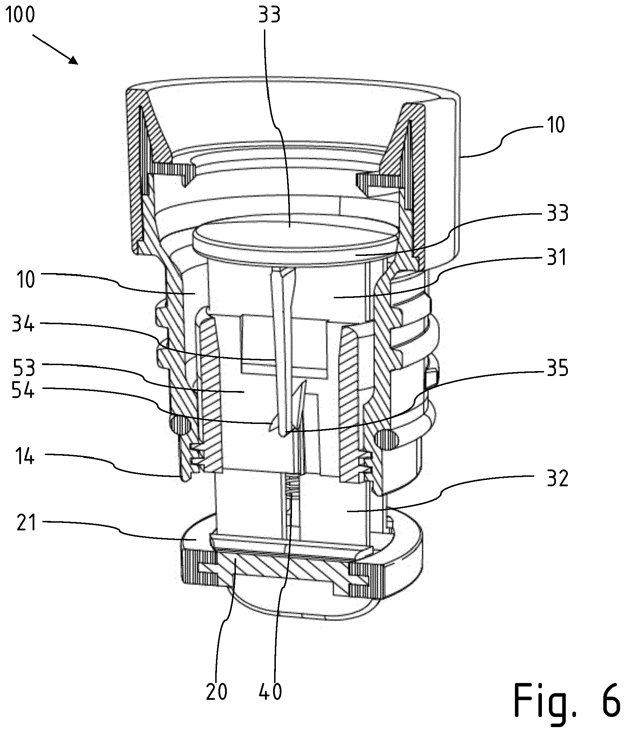

The essential function of the drinking bottle closure 100 according to the invention is explained with reference to the following sectional drawings. Figures 5 and 6 each show the drinking bottle closure 100 in its opening position, in two sectional views rotated by 90° to each other.

In the sectional view shown in figure 5, the sectional plane is perpendicular to the longitudinal webs 32. In the assembled state shown, the drinking bottle closure 100 has two units that can be moved relatively to each other. An outer unit is formed by the housing 10 and the valve support element 50 inserted in it. An inner unit is formed by the valve unit 30 with the top part 31 and the bottom part 20. The upper part 31 and the lower part 20 are positively coupled to each other and guided inside the valve support element 50. The compression spring 40 acts between the valve support element 50 and the upper part 31 in order to either open the valve unit 30 and hold it in the open position or into the closed position and hold it there with each actuation stroke of the user.

In the opening position shown in fig. 5, the upper sealing disk 33 is lifted from a sealing edge 13 at the pouring rim 12 to such an extent that an outlet opening 2 is provided. On the underside, the sealing element 21 of the lower part 20 is positioned at a distance from a ring edge 14 of the housing 10, so that an inlet opening 1 is formed there. A flow path is formed between the inlet opening 1 and the outlet opening 2, which leads through the interior of the housing 10, in particular through the interior of the valve support element 50.

In the opening position shown in Fig. 5, the large axial stroke of the valve unit 30 in relation to the outer part of the drinking bottle closure 100 is clearly visible. The large stroke is achieved by the preferred design of the pressure latching unit.

According to the example of the invention illustrated here, long guide tongues 34 are moulded onto the upper part 31. They protrude from the underside of the sealing disc 33 and extend over more than half the height of the longitudinal webs 32. They are only fixed in the upper part and can freely rebound at the bottom. It is essential that the guide tongues 34 each have a hook projection 35 at their lower end, projecting inwards towards the central/longitudinal axis, which interacts with a guide link 54, which is formed on an inner wall in the guide recess 53 in the valve support element 50. The push/latch mechanism also includes a further guide link 55, which is formed on the wall of the guide recess 53 facing outwards. In the open position shown, the hook projection 35 is spring-loaded below the guide link 54. Due to the spring force of the compression spring 40, the hook projection 35 is pulled under the guide link 54 and keeps the valve unit 30 in the open position.

The position of the hook projection 35 on the inner guide link 54 within the guide recesses 53 is particularly visible in Figure 6 which is a second sectional view rotated by 90°.

When the valve unit 30 is pressed down, the hook projection 35 is deflected to the left at the upper left slope of the guide link 54 and then rebounds in the position shown. In order to release the hook projection 35 from this positive locking, a counter-rotating movement is necessary, with which the guide tongue 34 is moved to the right when lowering so far that the hook projection 35 is guided upwards again along the right outer slope. This function is effected by the outer guide link 55 (see figure 5).

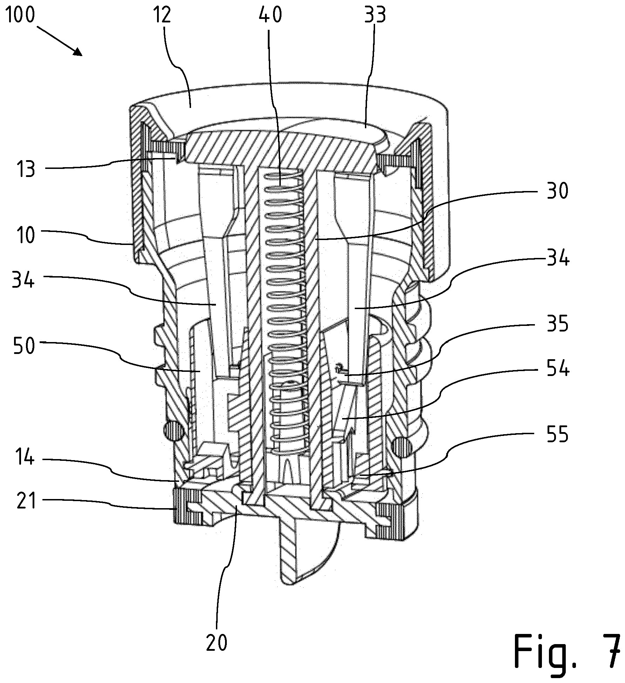

Figure 7 shows the locking status in a similar way to figure 5. The outer edge of the upper valve disc 33 rests against the sealing edge 13 of the pouring rim 12. At the same time, the elastomeric sealing element 21 is pressed against the ring edge 14 of the housing 10.

The hook projections 35 of the guide tongues 34 are released from the inner guide link 54 and are located above it. The compression spring 40 causes the upper part 31 to be pushed up in relation to the valve support element 50 inserted in the housing 10. The upper part 31, in turn, pulls the lower part 20 with it due to the positive coupling and presses the sealing element 21 against the ring edge 14. The force of the compression spring 40 initially effects the sealing at the inlet opening. The elastomeric sealing element 21 is then pressed against the hard ring edge 14 of the housing 10. This creates the primary seal of the drinking bottle on which the drinking bottle closure 100 is placed. A secondary seal, which does not have to be pressuretight, but only provides leakage protection against residual quantities in the flow paths, is formed by the conically shaped edge of the sealing disc 33 resting against the likewise conically shaped sealing edge 13. The elasticities in this contact zone allow a certain tolerance in the axial positioning to each other. A double fit between the upper and lower sealing line is thus avoided.

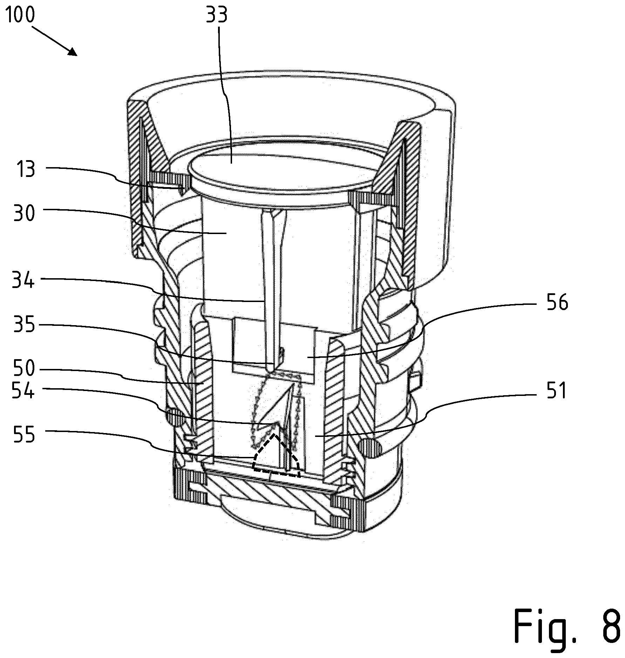

The path of the hook projection 35 at the end of the guide tongue 34 is shown in figure 8. This is a representation of the closed position of the drinking bottle cap 100 in a view rotated by 90° compared to figure 7, which is thus analogous to the sectional view of the opened drinking bottle cap 100 in figure 6.

The line of interlinked arrows shows the direction of movement of the hook projection 35 around the guide link 54, which is formed on the inside of the guide recess 53 in the valve support element 50. If the user presses down on the sealing disc 33 and thus on the valve unit 31, the hook projection 35 first moves towards the upper left slope of the guide link 54 and is deflected to the left there. When it has passed the lower left tip of the guide link 54, the guide tongue 34 rebounds again so that the hook projection 35 is below the indentation on the guide link 54. Due to the spring force, the hook projection 35 is pulled into the indentation, and the valve unit 30 is thus positively locked in the valve support element 50.

When the valve unit 30 is subsequently lifted from the open position shown in Figures 5 and 6, the hook projection 35 is first lifted out of positive engagement with the indentation on the underside of the guide link 54. It is moved to the right by the further guide link 55 on the outside (see figure 5), indicated as a dashed line in figure 8, when the long guide tongue 34 is lowered deeply. During the subsequent upward movement, the hook projection 35 is guided upwards along the right-hand side edge of the guide link 54 and can then rebound into the central starting position once it has passed the upper tip of the guide link 54.

Worth mentioning is the preferred formation of the inner wall of the guide recess 53 in the upper area. A small recess with a slightly sloping surface 56 is visible there. This ensures the free movement of the upper part 31 in the shown closed position. The position of the upper part 31 is not affected by the hook projections 35 because they are not in contact with the valve support element 50 at the level of the surface 56. The centring of the upper valve disc 33 in relation to the sealing edge 13 is thus achieved in one dimension by the guidance of the longitudinal webs 32 in the guide recess 53 of the valve support element and in the other direction by the conicity of the sealing edge 13 and the outer edge of the valve disc 33. When the of the valve disc 33 is pressed down, the hook projections 35 rest again against the wall or at least approach the wall in the guide recess 53, so that a secure contact of the hook projection 35 to the edges of the guide link 54 is ensured.

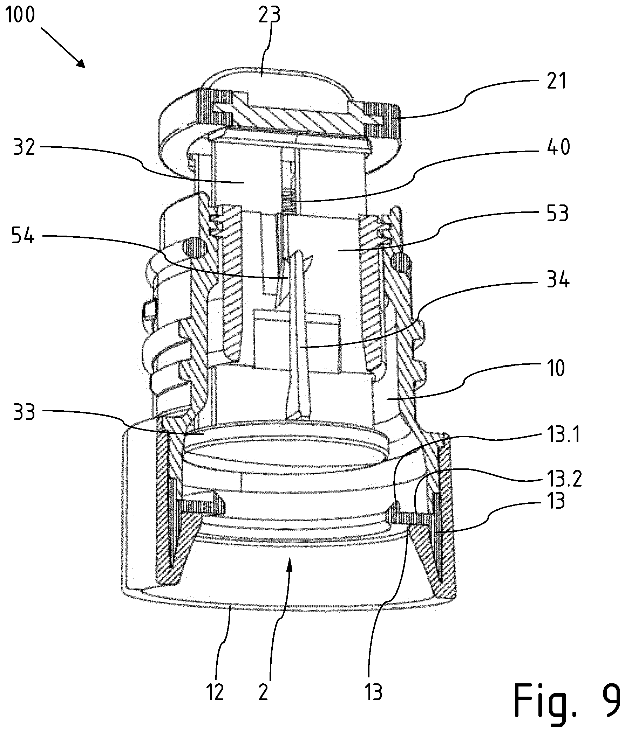

In figure 9 the drinking bottle closure 100 is seen in sectional view from the same perspective as in figure 6 but turned upside down to illustrate a drip stop function. If the drinking bottle closure of an emptied drinking bottle is inadvertently left in the opening position, in which the upper sealing disc 33 is lifted off the sealing edge 13 at the pouring rim 12, so that there is the outlet opening 2, residual liquid can run down the inside of the housing 10. This is then collected in a depression 13.2, which is formed by the special profile shape of the elastomeric sealing edge 13 and by the inner wall of the housing10. In the "upside down" position shown in Figure 9, a profile edge 13.1 forms an undercut and an obstacle which is not overcome by small residual liquid quantities. Thus, the profile edge 13.1 fulfils two functions at the same time. On the one hand, when the drinking bottle closure is closed, it rests resiliently against the sealing disc 33 and improves the sealing effect; on the other hand, in the open position, it serves as a drip catcher.

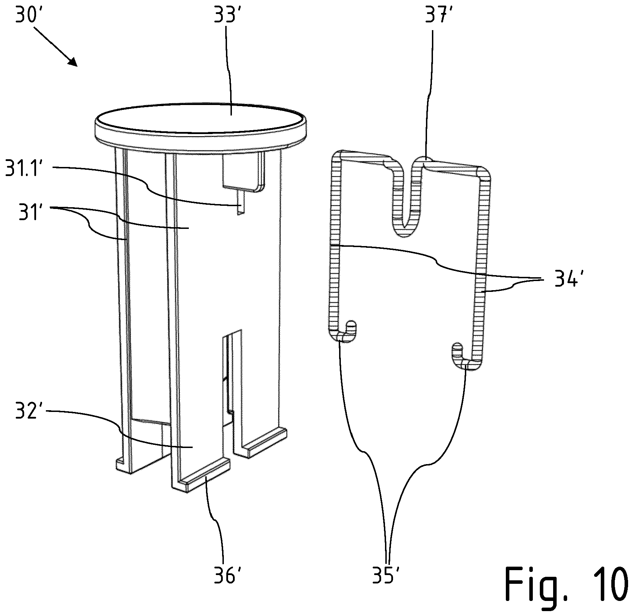

Figure 10 shows two parts of an alternative upper part 31' of an alternative valve unit 30'. The design of the upper part 31' with a sealing disc 33' and longitudinal webs 32', which have a profile element 36' at the respective lower edge for sliding on a lower part, is analogous to the first design.

The difference with view to the first embodiment is that the upper part 31' has a recess 31.1' running from one side to the other, into which a spring clamp element 37' made of metal wire can be inserted. The spring clamp element 37' has two long guide tongues 34', each of which has at its lower end a hook projection 35' projecting inwards towards the central/longitudinal axis. The recess 31.1' extends upwards in a slit shape. The sealing disc 33' has a web on its underside which is pressed into the recess 31.1' after the spring clamp element 37' has been inserted into it.

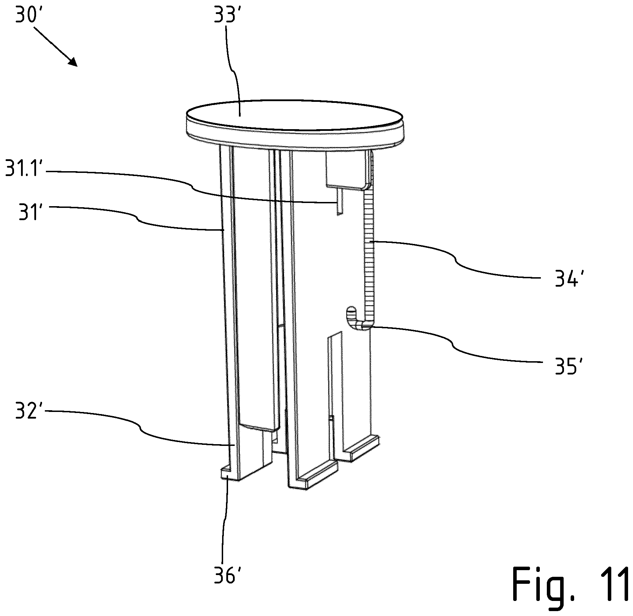

Figure 11 shows the upper part 31' assembled, i.e. with inserted spring clamp element 37'. On each side of the upper part 31' one guide tongue 34' protrudes, which extends downward. Just like the first version of the upper part with the spring tongues and hook projections moulded in one piece from plastic, the guide tongues 34' and hook projections 35' of the spring clamp element 37' each interact with one of the guide slides 54 as described above.

The advantage of the multi-part design of the upper part 31' with the separate spring clamp element 37' is the higher number of latching cycles that can be carried out with the long guide tongues without material fatigue.

| | | | |
|---|---|---|---|
| List of reference numbers | | 33' | sealing washer |
| 100 | drinking bottle cap | 34', | tongues |
| 10 | housing | 35' | hook projection |
| 12 | pouring rim | 36' | profile element |
| 13 | sealing edge | 37' | spring clamp element |
| 13.1 | profile edge | | |
| 13.2 | depression | 1 | inlet opening |
| 14 | ring edge | 2 | outlet opening |
| 15 | external thread | | |
| 16 | sealing ring | 200 | drinking bottle |
| 20 | lower part | 201 | neck |
| 21 | lower sealing element | 202 | internal thread |
| 22 | receiving shoes | | |
| 23 | knob | | |
| 30 | valve unit | | |
| 31 | an upper part | | |
| 32, | longitudinal webs | | |
| 33 | upper valve disc | | |
| 34 | guide tongues | | |
| 35 | hook projection | | |
| 36 | profile element | | |
| 50 | valve support element | | |
| 51 | recess | | |
| 52 | external thread | | |
| 53 | guide recess | | |
| 54 | inner guide slot | | |
| 55 | guide slot | | |
| 56 | surface | | |
| 57 | projection | | |
| 40 | compression spring | | |
| 30' | alternative valve unit | | |
| 31' | alternative upper part | | |
| 31.1' | recess | | |
| 32', | longitudinal webs | | |

## Claims

1. Drinking bottle cap (100), comprising at least:
- a housing (10) with a ring edge (14) which surrounds an inlet opening (1), and with a pouring rim (12) which surrounds a outlet opening (2) and on whose inner circumference an inwardly projecting, circumferential sealing rim (13) is formed;
- a valve unit (30; 30') with an actuating element and with a lower part (20) which covers the inlet opening (1) and has a sealing element (21) and
- an upper valve disc (33; 33'), which is arranged inside the housing (10) and which maintains a distance from the sealing edge (13) in an open position of the valve unit (30; 30') and which abuts the sealing edge (13) in a closed position;
**characterised in that**
- **in that** a valve carrier element (50) is provided which is to be detachably connected to the housing (10) and in which the valve unit (30; 30') is guided axially displaceably against the force of at least one spring element (40), and
- **in that** at least one axially extending, resiliently deflectable guide tongue (34; 34') with an end hook extension (35; 35') is formed or fitted on the valve unit (30; 30'), which hook extension (35; 35') is guided along a guide link (54, 55) on the valve carrier element (50) and/or can be fixed thereon in a form-fitting manner.

2. Drinking bottle closure (100) according to claim 1, **characterised in that**
- **in that** the valve unit (30; 30') comprises an upper part (31; 31') with the upper valve disc (33; 33') and a lower part (20) with the lower sealing element (21) and
- **in that** the upper part (31; 31') and/or the lower part (20) are passed through at least opening (51) in the valve carrier element (50), and
- **in that** the upper part (31; 31') and the lower part (20) can be coupled to one another with a positive fit.

3. Drinking bottle closure (100) according to claim 2, **characterised in that** at least one longitudinal web (32; 32') is formed on the upper part (31; 31'), which extends axially parallel to the longitudinal axis (L) of the valve unit (30; 30'), which is guided through the opening (51) in the valve carrier element (50) and which has a profile element (36; 36') on its lower edge.

4. Drinking bottle closure (100) according to claim 3, **characterised in that** at least one receiving shoe (22) is formed on the lower part (20), into which the profile element (36; 36') can be inserted by a movement transverse to the longitudinal axis (L).

5. Drinking bottle closure (100) according to any of claims 2 to 4, **characterised in that** two plane-parallel longitudinal webs (32; 32') are formed on the upper part (31; 31'), between which the longitudinal axis (L) extends and between which the spring element (40) is arranged.

6. Drinking bottle closure (100) according to claim 5, **characterised in that** a guide tongue (34; 34') is formed on the outer sides of each of the two longitudinal webs (32; 32') and **in that** at least one guide link (54, 55) for the guide tongue (34; 34') is formed in at least one inner wall of a guide recess (53) in the valve carrier element (50).

7. Drinking bottle closure (100) according to any of the preceding claims, **characterised in that** the valve carrier element (50) can be fixed in an internal thread of the housing (10) by means of an external thread (52).

8. Drinking bottle closure (100) according to any of the preceding claims, **characterised in that** the upper part (31') is to be connected to at least one spring clip element (37') of metal wire, which comprises at least one guide tongue (34'), which at its lower end has a hook projection (35') projecting inwards towards the central/longitudinal axis.

9. Drinking bottle closure as in claim 8, **characterised in that** two parallel guide tongues (34') are part of the same spring clip element (37') which is inserted into the upper part (31').

10. Drinking bottle closure (100) as in any of the preceding claims, **characterised in that** the sealing rim (13) has at least one profiled edge (13.1) projecting from its underside, a depression (13.2) serving as a drip catcher being formed between the profiled edge (13.1) and the housing (10) when the pouring opening (2) points downwards.

## Patentansprüche

1. Trinkflaschenverschluss (100), mindestens umfassend:
- ein Gehäuse (10) mit einem Ringrand (14), der eine Einlassöffnung (1) umgibt, und mit einem Ausgussrand (12), der eine Auslassöffnung (2) umgibt und an dessen Innenumfang ein nach innen vorstehender, umlaufender Dichtrand (13) gebildet ist;
- eine Ventileinheit (30; 30') mit einem Betätigungselement und mit einem Unterteil (20), das die Einlassöffnung (1) abdeckt und ein Dichtelement (21) und
- einen oberen Ventilteller (33; 33') aufweist, der innerhalb des Gehäuses (10) angeordnet ist und der in einer offenen Stellung der Ventileinheit (30; 30') einen Abstand zur Dichtkante (13) einhält und der in einer geschlossenen Stellung an der Dichtkante (13) anliegt;
**dadurch gekennzeichnet, dass**
- ein Ventilträgerelement (50) vorgesehen ist, das lösbar mit dem Gehäuse (10) zu verbinden ist und in dem die Ventileinheit (30; 30') gegen die Kraft mindestens eines Federelements (40) axial verschiebbar geführt wird, und
- dass an der Ventileinheit (30; 30') mindestens eine axial verlaufende, federnd auslenkbare Führungszunge (34; 34') mit einem endseitigen Hakenfortsatz (35; 35') gebildet oder angebracht ist, wobei der Hakenfortsatz (35; 35') entlang eines Führungsglieds (54, 55) am Ventilträgerelement (50) geführt wird und/oder daran formschlüssig befestigt werden kann.

2. Trinkflaschenverschluss (100) nach Anspruch 1, **dadurch gekennzeichnet, dass**
- die Ventileinheit (30; 30') ein Oberteil (31; 31') mit dem oberen Ventilteller (33; 33') und ein Unterteil (20) mit dem unteren Dichtelement (21) umfasst und
- dass das Oberteil (31; 31') und/oder das Unterteil (20) durch mindestens eine Öffnung (51) im Ventilträgerelement (50) hindurchgeführt sind und
- dass das Oberteil (31; 31') und das Unterteil (20) mit einem Formschluss aneinander koppelbar sind.

3. Trinkflaschenverschluss (100) nach Anspruch 2, **dadurch gekennzeichnet, dass** am Oberteil (31; 31') mindestens ein Längssteg (32; 32') gebildet ist, der sich axial parallel zur Längsachse (L) der Ventileinheit (30; 30') erstreckt, die durch die Öffnung (51) im Ventilträgerelement (50) geführt wird und die an ihrer Unterkante ein Profilelement (36; 36') aufweist.

4. Trinkflaschenverschluss (100) nach Anspruch 3, **dadurch gekennzeichnet, dass** am Unterteil (20) mindestens ein Aufnahmeschuh (22) gebildet ist, in den das Profilelement (36; 36') durch eine Bewegung quer zur Längsachse (L) eingesetzt werden kann.

5. Trinkflaschenverschluss (100) nach einem der Ansprüche 2 bis 4, **dadurch gekennzeichnet, dass** am Oberteil (31; 31') zwei planparallele Längsstege (32; 32') gebildet sind, zwischen denen die Längsachse (L) verläuft und zwischen denen das Federelement (40) angeordnet ist.

6. Trinkflaschenverschluss (100) nach Anspruch 5, **dadurch gekennzeichnet, dass** an den Außenseiten jedes der beiden Längsstege (32; 32') eine Führungszunge (34; 34') gebildet ist und dass mindestens ein Führungsglied (54, 55) für die Führungszunge (34; 34') in mindestens einer Innenwand einer Führungsausnehmung (53) im Ventilträgerelement (50) gebildet ist.

7. Trinkflaschenverschluss (100) nach einem der vorstehenden Ansprüche, **dadurch gekennzeichnet, dass** das Ventilträgerelement (50) mittels eines Außengewindes (52) in einem Innengewinde des Gehäuses (10) befestigt werden kann.

8. Trinkflaschenverschluss (100) nach einem der vorstehenden Ansprüche, **dadurch gekennzeichnet, dass** das Oberteil (31') mit mindestens einem Federbügelelement (37') aus Metalldraht zu verbinden ist, das mindestens eine Führungszunge (34') umfasst, die an ihrem unteren Ende einen nach innen zur Mittel-/Längsachse vorstehenden Hakenvorsprung (35') aufweist.

9. Trinkflaschenverschluss nach Anspruch 8, **dadurch gekennzeichnet, dass** zwei parallele Führungszungen (34') Teil desselben Federbügelelements (37') sind, das in das Oberteil (31') eingesetzt ist.

10. Trinkflaschenverschluss (100) nach einem der vorstehenden Ansprüche, **dadurch gekennzeichnet, dass** der Dichtrand (13) mindestens einen profilierten Rand (13.1), der von seiner Unterseite vorsteht, aufweist, wobei eine als Tropfenfänger dienende Vertiefung (13.2) zwischen dem profilierten Rand (13.1) und dem Gehäuse (10) gebildet wird, wenn die Ausgussöffnung (2) nach unten zeigt.

## Revendications

1. Fermeture de bouteille pour boire (100), comprenant au moins :
- un logement (10) pourvu d'un bord annulaire (14) qui entoure une ouverture d'entrée (1) et pourvu d'un rebord verseur (12) qui entoure une ouverture de sortie (2) et sur la circonférence intérieure duquel un rebord d'étanchéité circonférentiel faisant saillie vers l'intérieur (13) est formé ;
- une unité de soupape (30 ; 30') pourvu d'un élément d'actionnement et d'une partie inférieure (20) qui recouvre l'ouverture d'entrée (1) et présente un élément d'étanchéité (21) et
- un disque de soupape supérieur (33 ; 33'), qui est agencé à l'intérieur du logement (10) et qui maintient une distance par rapport au bord d'étanchéité (13) dans une position ouverte de l'unité de soupape (30 ; 30') et qui vient en butée contre le bord d'étanchéité (13) dans une position fermée ;
**caractérisé en ce que**
- un élément de support de soupape (50) est prévu, lequel doit être relié de manière amovible au logement (10) et dans lequel l'unité de soupape (30 ; 30') est guidée de manière à pouvoir se déplacer axialement contre la force d'au moins un élément à ressort (40), et
- **en ce qu'**au moins une languette de guidage (34 ; 34') s'étendant axialement et pouvant être déviée élastiquement avec une extension de crochet d'extrémité (35 ; 35') est formée ou montée sur l'unité de soupape (30 ; 30'), laquelle extension de crochet (35 ; 35') est guidée le long d'une liaison de guidage (54, 55) sur l'élément de support de soupape (50) et/ou peut être fixée sur celui-ci par complémentarité de forme.

2. Fermeture de bouteille pour boire (100) selon la revendication 1, **caractérisée en ce que**
- l'unité de soupape (30 ; 30') comprend une partie supérieure (31; 31') pourvue du disque de soupape supérieur (33 ; 33') et une partie inférieure (20) pourvue de l'élément d'étanchéité inférieur (21) et
- **en ce que** la partie supérieure (31 ; 31') et/ou la partie inférieure (20) sont passées à travers au moins une ouverture (51) de l'élément de support de soupape (50), et
- **en ce que** la partie supérieure (31; 31') et la partie inférieure (20) peuvent être couplées l'une à l'autre avec un ajustement positif.

3. Fermeture de bouteille pour boire (100) selon la revendication 2, **caractérisée en ce qu'**au moins une bande longitudinale (32 ; 32') est formée sur la partie supérieure (31 ; 31'), qui s'étend axialement parallèlement à l'axe longitudinal (L) de l'unité de soupape (30 ; 30'), qui est guidée à travers l'ouverture (51) dans l'élément de support de soupape (50) et qui présente un élément profilé (36 ; 36') sur son bord inférieur.

4. Fermeture de bouteille pour boire (100) selon la revendication 3, **caractérisée en ce qu'**au moins un sabot de réception (22) est formé sur la partie inférieure (20), dans lequel l'élément profilé (36 ; 36') peut être inséré par un mouvement transversal à l'axe longitudinal (L).

5. Fermeture de bouteille pour boire (100) selon l'une quelconque des revendications 2 à 4, **caractérisée en ce que** deux bandes longitudinales parallèles et planes (32; 32') sont formées sur la partie supérieure (31; 31'), entre lesquelles l'axe longitudinal (L) s'étend et entre lesquelles l'élément à ressort (40) est agencé.

6. Fermeture de bouteille pour boire (100) selon la revendication 5, **caractérisée en ce qu'**une languette de guidage (34; 34') est formée sur les côtés externes de chacune des deux bandes longitudinales (32 ; 32') et **en ce qu'**au moins une liaison de guidage (54, 55) pour la languette de guidage (34; 34') est formée dans au moins une paroi interne d'un évidement de guidage (53) dans l'élément de support de soupape (50).

7. Fermeture de bouteille pour boire (100) selon l'une quelconque des revendications précédentes, **caractérisée en ce que** l'élément de support de soupape (50) peut être fixé dans un filetage interne du logement (10) au moyen d'un filetage externe (52).

8. Fermeture de bouteille pour boire (100) selon l'une quelconque des revendications précédentes, **caractérisée en ce que** la partie supérieure (31') est destinée à être reliée à au moins un élément de pince à ressort (37') en fil métallique, qui comprend au moins une languette de guidage (34'), qui, au niveau de son extrémité inférieure, présente une saillie en forme de crochet (35') faisant saillie vers l'intérieur vers l'axe central/longitudinal.

9. Fermeture de bouteille pour boire selon la revendication 8, **caractérisée en ce que** deux languettes de guidage parallèles (34') font partie du même élément de pince à ressort (37') qui est inséré dans la partie supérieure (31').

10. Fermeture de bouteille pour boire (100) selon l'une quelconque des revendications précédentes, **caractérisée en ce que** le rebord d'étanchéité (13) présente au moins un bord profilé (13.1) faisant saillie depuis sa face inférieure, un renfoncement (13.2) faisant office de dispositif de capture de goutte qui est formé entre le bord profilé (13.1) et le logement (10) lorsque l'ouverture de versage (2) est dirigée vers le bas.
